# EUROPEAN PATENT APPLICATION

(11) **EP 4 512 234 A1**
(43) Date of publication of application: **26.02.2025**
(21) Application number: 24193819.0
(22) Date of filing: 09.08.2024
(51) Int. Cl.: A01G 25/02, A01B 49/04, A01G 25/06, A01G 25/09, E02F 5/10, E02F 5/12, F16L 1/032

(54) **HOSE SPREADING UNIT FOR AGRICULTURAL MACHINES**

(30) Priority: 23.08.2023 IT 202300017505
(71) Applicant: DAMAX S.r.l., 25023 Gottolengo (BS) (IT)
(72) Inventor: DADA, Luciano, 25023 GOTTOLENGO (BS) (IT)
(74) Representative: Riccardi, Sergio

(57) **Abstract**

There is provided a hose spreading unit (1) for agricultural machine (300), capable of spreading an irrigation hose (100) on the ground and comprising: a roll holding device (2), capable of supporting the irrigation hose (100) coiled in rolls (102), a positioning device (4), capable of laying the irrigation hose (100) uncoiled on the ground, an uncoiling device (3), capable of uncoiling the irrigation hose (100) and canalizing it towards the positioning device (4), a calender (30), comprising at least one drive roller (31), capable of moving the irrigation hose (100), a sliding channel (37), downstream of the calender (30) capable of canalizing the irrigation hose (100) precisely and substantially without variation in position in directions perpendicular to the axial direction of the irrigation hose (100).

## Description

The present invention relates to a hose spreading unit for agricultural machines of the type specified in the preamble of claim 1.

Hoses for field irrigation are currently known.

These are pipes made of polymeric material having a series of holes, aligned and arranged all in the same radial position, at regular intervals.

Said pipes are positioned on the fields to be cultivated and partly buried so that they cannot be moved by wind and similar events.

Water is fed through said pipes or hoses and flows out from said holes, irrigating the agricultural field on which they are laid.

The aforesaid prior art comprises some important drawbacks.

In particular, positioning of the hoses is a long and laborious operation.

Firstly, one end of the hose must be constrained, for example by tying it to a pole specifically driven into the ground.

Then, the hose must be uncoiled and laid on the ground to be irrigated.

The hose laid on the ground is then cut, when it has covered the surface required and has been covered with soil, which is generally placed over the hose substantially along the whole of its length using a shovel.

In order to equip the agricultural field with irrigation hoses, generally arranged parallel to, and at a distance of one or a few metres from, one another, the same operation must be repeated many times.

With a view to automating said operation, hose spreading units to be coupled to tractors or agricultural machines have been developed.

These hose spreading units are equipped with a reel including said coiled hose and with a system for canalizing said hose up to a wheel that presses said hose so as to spread it on the ground.

Said hose spreading units are also equipped with elements that interact with the ground and capable of covering the irrigation hose with soil.

Similar units are described in the patent documents CN214382100U and CN211607628U.

However, many of the operations described, such as constraining and cutting the hoses, are still carried out manually.

Moreover, said hoses are very fragile and risk being broken while being spread on the ground by means of said spreading units.

In this situation, the technical task underlying the present invention is to provide a hose spreading unit for agricultural machines capable of substantially overcoming at least part of the aforesaid drawbacks.

Within this technical task, an important object of the invention is to obtain a hose spreading unit for agricultural machines that is capable of automatically performing all, or most of, the operations.

Another important object of the invention is to produce a hose spreading unit for agricultural machines that protects the hoses from breaking, spreading them in safety.

The technical task and the objects specified are achieved by a hose spreading unit for agricultural machines as claimed in the appended claim 1.

Preferred technical solutions are highlighted in the dependent claims.

The features and advantages of the invention are clarified hereunder by the detailed description of preferred embodiments of the invention, with reference to the accompanying drawings, wherein:

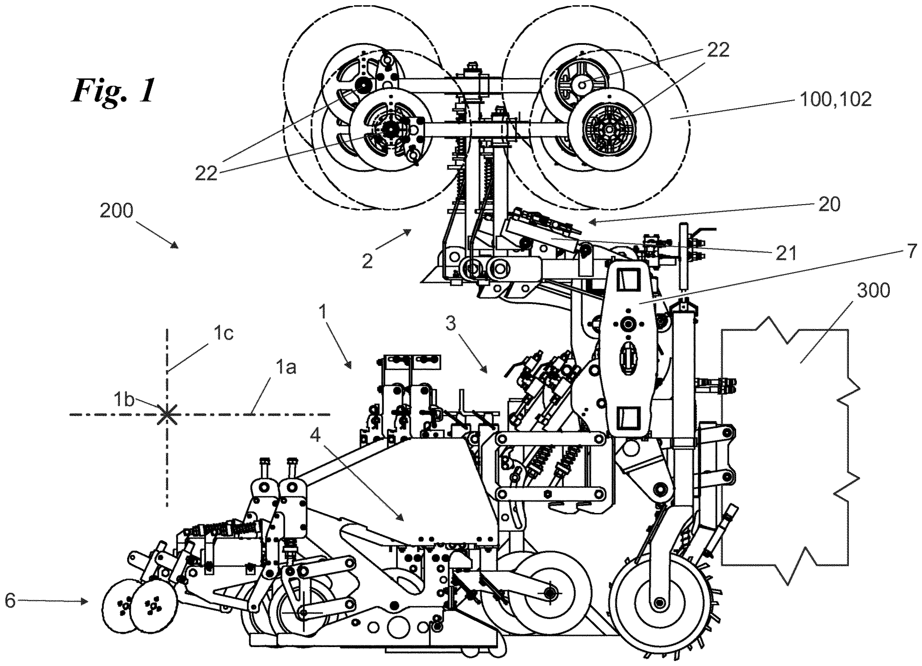

**Fig. 1** shows the hose spreading unit for agricultural machines according to the invention in a lateral view;

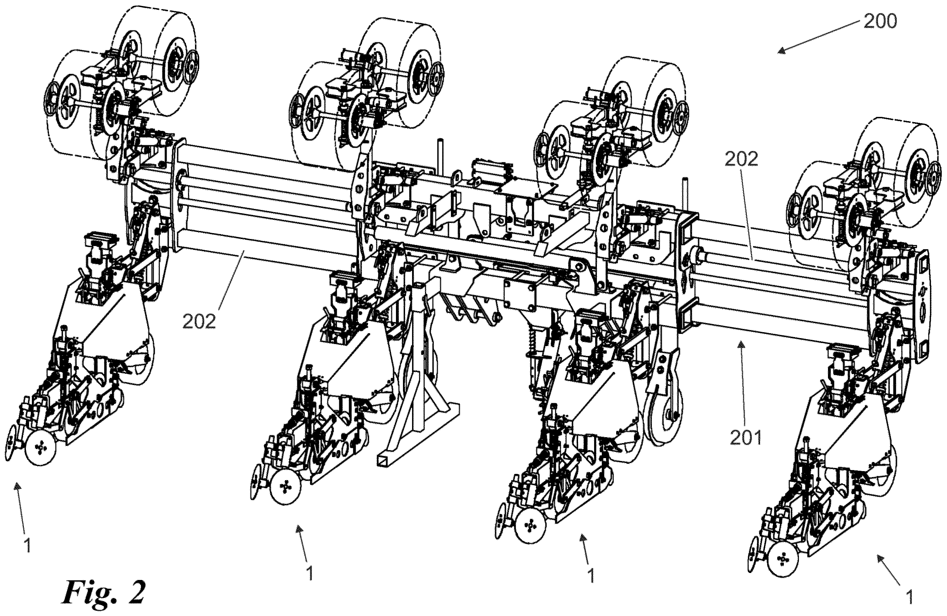

**Fig. 2** shows the hose spreading unit for agricultural machines according to the invention in an axonometric view;

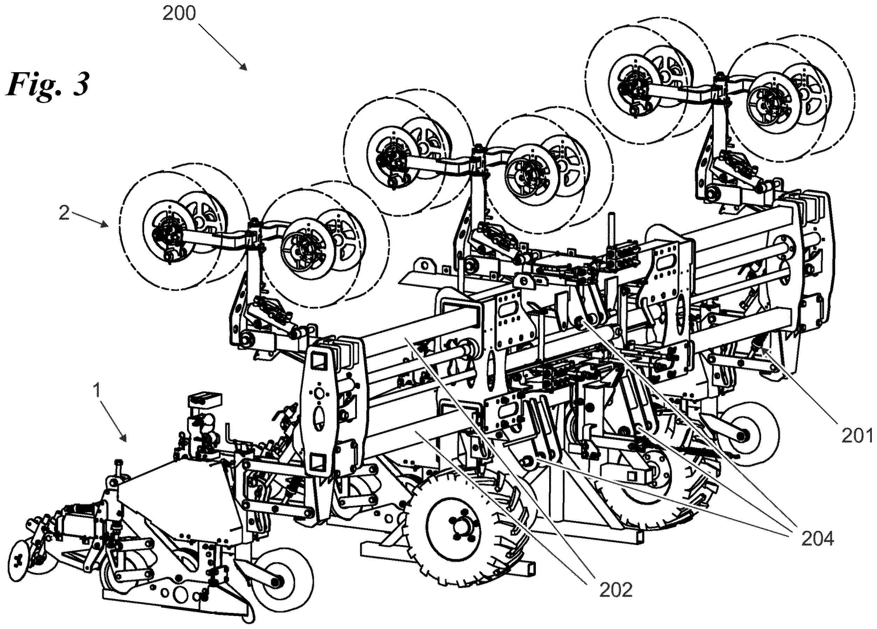

**Fig. 3** shows the hose spreading unit for agricultural machines according to the invention in a second axonometric view;

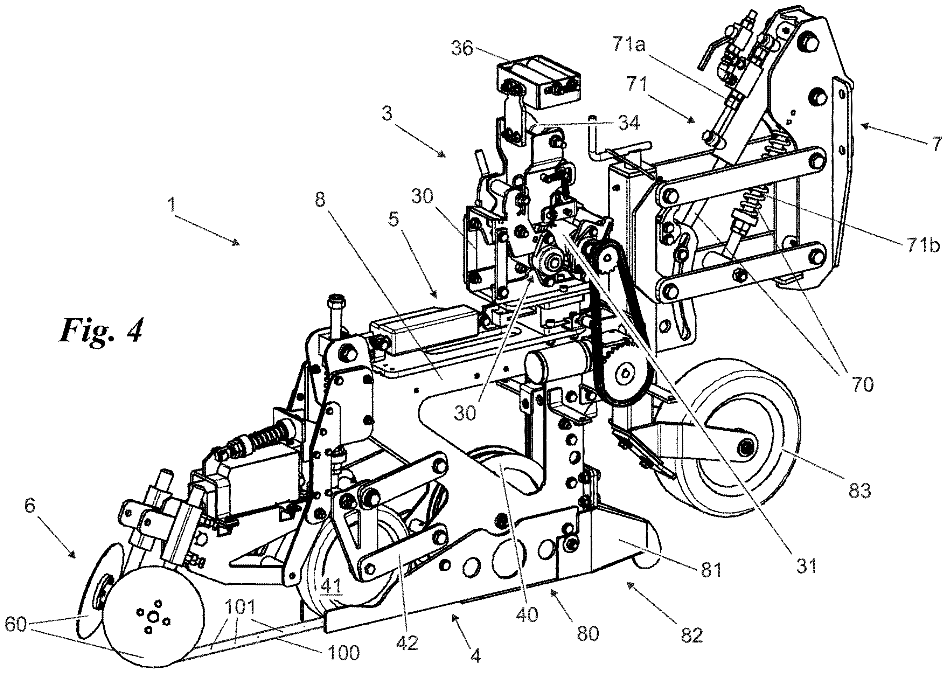

**Fig. 4** is a portion of the hose spreading unit for agricultural machines according to the invention in a first axonometric view;

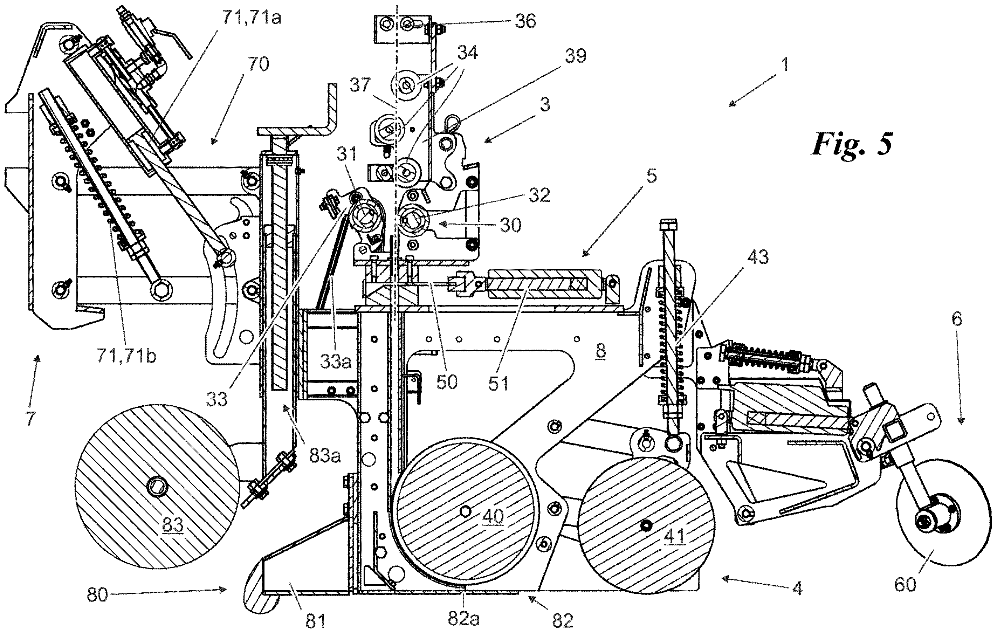

**Fig. 5** is a cross section of the portion of Fig. 4;

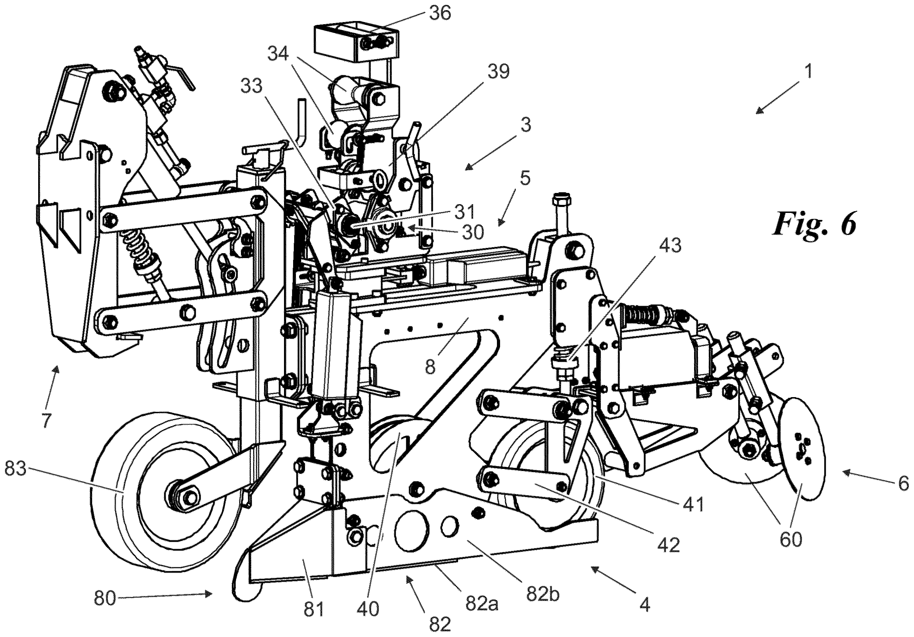

**Fig. 6** is the portion of Fig. 4 in a second axonometric view;

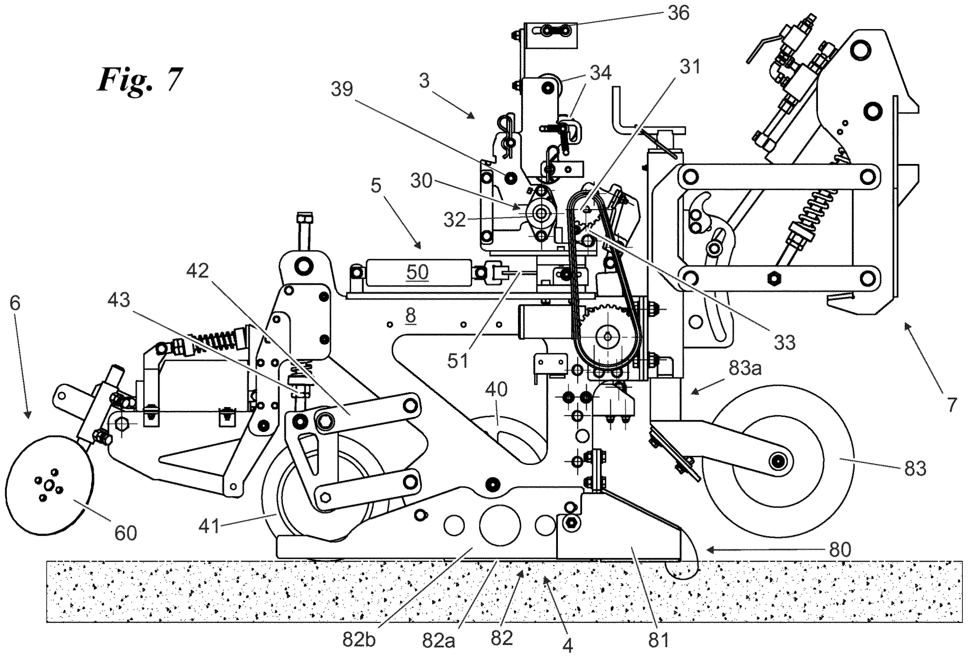

**Fig. 7** is a lateral view of the portion of Fig. 4;
**Fig. 8a** is a portion of the unit in a first configuration; and
**Fig. 8b** is a portion of the unit in a second configuration.

In the present document, the measurements, values, shapes and geometric references (such as perpendicularity and parallelism), when associated with words such as "approximately" or other similar terms such as "more or less" or "substantially", are to be understood as excluding measurement errors or inaccuracies due to production and/or manufacturing errors and, above all, excluding slight deviations from the value, measurement, shape or geometrical reference with which it is associated. For example, these terms, if associated with a value, preferably indicate a deviation not exceeding 10% of said value.

Moreover, when used, terms such as "first", "second", "upper", "lower", "main" and "secondary" do not necessarily identify an order, a priority of relationship or relative position, but can simply be used to distinguish different components from one another more clearly.

Unless otherwise specified, as will be apparent from the discussions below, terms such as "treatment", "information technology", "determination", "calculation" or similar refer to the action and/or processes of a computer or similar electronic calculation device that handles and/or converts data represented as physical, such as electronic quantities of registers of a computer system and/ or memories into other data similarly represented as physical quantities within computer systems, registers or other devices for the storage, transmission or display of information.

Unless otherwise indicated, the measurements and the data indicated in the present text are to be considered as based on the ICAO International Standard Atmosphere (ISO 2533:1975).

With reference to the figures, the hose spreading unit for agricultural machines according to the invention is indicated as a whole with the number **1.**

It is capable of spreading at least one irrigation hose **100,** known *per* se and preferably consisting of a pipe made of polymeric material with a series of holes **101,** aligned and all arranged in the same radial position, at regular intervals. The irrigation hose 100 is preferably initially compressed, so as to have a more or less flat normal section. Said section becomes circular again when the water is fed into the hoses after they have been spread on the ground.

It is capable of being constrained to an agricultural machine **300,** such as a tractor or tractor unit, known *per se.* The latter is preferably capable of transporting the hose spreading units 1 for use, and preferably also of supplying the unit 1 with power, such as electric, compressed air, mechanical or hydraulic power.

The agricultural machine 300 defines a longitudinal direction **1a,** of normal travel in a straight direction of said machine 300. The longitudinal direction 1a is perpendicular to a transverse direction **1b** and both are preferably on a horizontal plane in use. The vertical direction **1c** completes the triad in the three dimensions.

Preferably, the hose spreading unit 1 is constrained, preferably jointly, to other hose spreading units 1 forming a hose spreading group **200.** The constraint between the hose spreading units 1 preferably takes place through a main frame **201,** which is part of said hose spreading group 200.

The hose spreading group 200 is hence constrainable, through the main frame 201, to the agricultural machine 300 in a unified manner and preferably comprises a plurality of hose spreading units 1 mutually spaced apart so as to simultaneously spread a plurality of hoses 100.

Preferably, the main frame 201 is equipped with extensible arms **202,** levelling wheels **203** adjustable in height and fastening means **204,** preferably known, for example of the type with three tips, capable of allowing connection of the hose spreading group 200 to the agricultural machine 300.

The hose spreading unit 1 comprises, in brief, one or more of the following elements: a roll holding device **2,** capable of supporting at least one irrigation hose 100 coiled into rolls **102,** an uncoiling device **3,** capable of uncoiling said hose and canalizing it to a positioning device **4,** capable of arranging the irrigation hose 100 on the ground, a cutting device **5,** capable of cutting the irrigation hose 100 in a suitable position and a covering device **6,** capable of covering the irrigation hose 100 with soil after said hose 100 has been laid on the ground.

Structurally, the hose spreading unit 1 comprises, preferably, mainly a fastening member **7,** capable of allowing mechanical connection of the hose spreading unit 1 to the agricultural machine 300 or, more preferably, to the main frame 201, and a first frame **8,** to support the various devices described and, in particular, at least part of the positioning device 4.

The fastening member 7 can preferably be constrained jointly and releasably to the agricultural machine 300. It is constrained to the first frame 8 preferably through first connection means **70** of labile kind. Said first connection means 70 preferably comprise a quadrilateral, preferably an articulated parallelogram, capable of allowing the movement of the first frame 8 at least in vertical direction 1c and first movement means **71,** capable of allowing the movement of the first frame 8 in respect of the fastening member 7 when controlled and preferably along the degree of freedom permitted by the articulated quadrilateral. The movement means can comprise a first piston **71a,** for example electric or hydraulic, and a damping cylinder **71b.**

The roll holding device 2 comprises a second frame **20,** capable of supporting said roll holding device 2.

The second frame 20 is constrained, preferably in a labile manner, to the fastening member 7. The second frame 20 is also connected to the fastening member 7 or to the first frame 8 through second movement means **21,** such as an electrohydraulic or hydraulic piston.

Preferably, the roll holding device 2 further comprises at least one uncoiling reel **22,** capable of supporting a hose 100 coiled in a roll **102** and having a degree of rotational freedom that allows its uncoiling, preferably parallel to the transverse axis **1b**.

The uncoiling reel 22 is preferably arranged above of the first frame 8, when the unit 1 is in use. The second movement means 21 are capable of allowing lowering of the uncoiling reel 22, for example through rotation of the second frame 20 around a horizontal axis, for loading of the rolls 102.

Preferably, the uncoiling reel 22 comprises a flywheel for blocking the roll in the direction of the axis of rotation of said roll 102. Preferably, the uncoiling reel 22 further comprises a roll holding axis with conical support to adapt to all diameters of the roll 102 and a double thrust clutch that helps to eliminate inertial movements.

The uncoiling device 3 is preferably constrained to the first frame 8 through a third frame **39.**

Preferably, it comprises a calender **30,** comprising at least one drive roller **31,** capable of moving said hose 100. The calender 30 also comprises a second roller 32, preferably idle. The drive roller 30 is preferably driven by an electric motor and by means of a chain and pinion connection with the same electric motor. Moreover, the drive roller 31 is preferably arranged on a moving arm **33,** movable by a piston **33a,** for example of electric type. Consequently, the drive roller 31 can move away from the second roller 32 and open or close the calender 30 so as to allow loading of the hose 100 and the right pressure for its movement.

The drive rollers 31 and the second roller 32 preferably have their rotation axis parallel to the transverse direction 1b.

The drive roller 31, and preferably also the second roller 32, are preferably coated with elastomeric polymer, and have grooves, similar to the tyre treads, with the aim of improving static friction between said rollers and the hose 100.

Downstream of the calender 30, in the direction of forward movement of the hose 100, hence preferably below said calender 30, a sliding channel **37** is preferably present, capable of canalizing, precisely and substantially without variations in position in transverse direction, the hose 100 and preferably with axis in vertical direction 1c. It consists of a rigid slot preferably of a length of the order of magnitude of decimetres, and preferably ranging from 0.5 dm to 2 dm, and having in normal cross section a constant aperture, shaped approximately to match the dimension of the normal cross section of said hose 100. In particular, said aperture has a width, in longitudinal direction 1a, ranging from 5 mm to 3 cm and a length, in transverse direction 1b, ranging from 3 cm to 2 dm. The sliding channel 37 is easily interchangeable, for example constrained to the first frame 8 through interlocking or a few screws, for example less than four in number, so that the user can change the sliding channel 37 depending on the hose 100. Finally, the sliding channel 37 is preferably made of polymeric material with reduced friction coefficient, such as polypropylene or the like.

Upstream of the calender 30, and hence above said calender 30, a plurality of double conical rollers **34** are preferably present, having a minimum diameter at the centre and with increasing conicity from top to bottom, so as to canalize the hose 100 increasingly towards the calender 30. The double conical rollers 34 are preferably present in a number from two to five, preferably three. Preferably, the double conical rollers 34 have an axis parallel to the transverse direction 1b.

Above the double conical rollers 34, a double roller **36** is preferably present, preferably having its axis parallel to the transverse direction 1b, capable of initially canalizing the hose 100, before the double conical rollers 34.

Below the uncoiling device 3, the positioning device 4 is preferably present, capable of arranging the irrigation hose 100 on the ground. It is mainly constrained directly to the first frame 8.

Preferably, the first frame 8 defines a plow-like member **80.** It comprises a front portion **81** which converges so that when the agricultural machine 300 moves forward, its front portion is wedge shaped and can be inserted into the soil for a depth preferably of some centimetres, so as to move forward in the ground at a substantially constant distance from the surface.

Preferably, the first frame 8 also defines, in this area, a closed portion **82** with a lower plate **82a** and side plates **82b.**

Preferably, the first frame 8 also comprises a supporting wheel **83** on the ground. It is preferably positioned, in longitudinal direction 1a and the direction of forward movement, in front of the first frame 8, and comprises means for adjusting the height **83a** of its axis from the ground.

The positioning device 4 comprises a first positioning wheel **40,** preferably arranged, in use, close to but without contact with the ground and with its axis in transverse direction 1b. The first positioning wheel 40 is preferably substantially below the uncoiling device 3. More preferably, the hose 100 descends vertically from the sliding channel 37 to the positioning wheel 40. Moreover, the first positioning wheel 40 is preferably inside the closed portion 82.

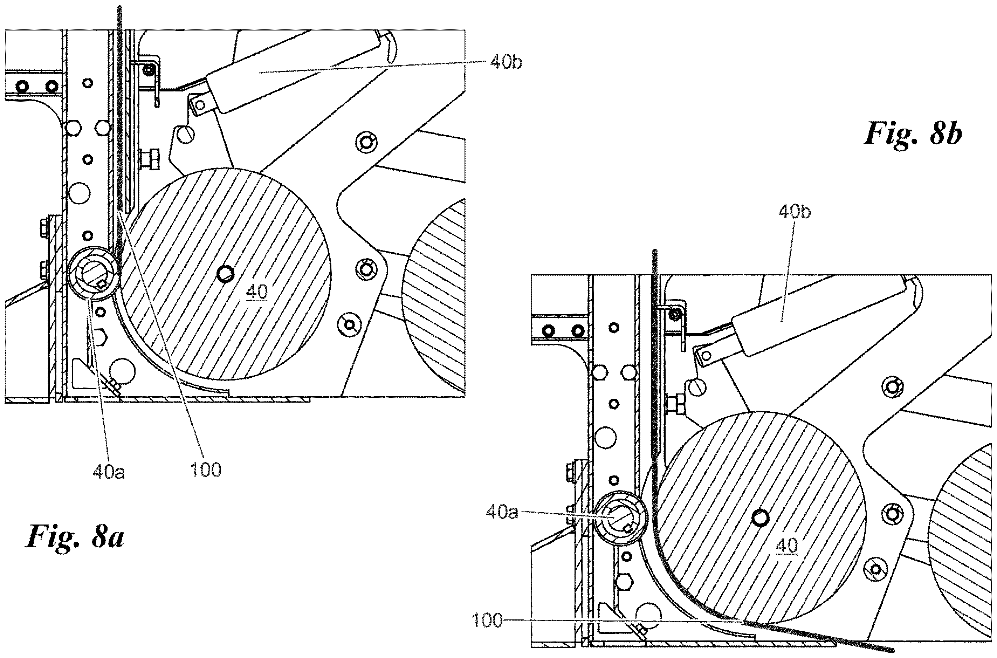

In the variant illustrated in the figures, the positioning wheel 40 is preferably accompanied by a further driving wheel **40a** capable of assisting the path of the hose. The driving wheel 40a preferably takes its motion from the drive roller 31 through a belt or the like. Moreover, to allow feed of the hose 100, preferably the system consisting of the first positioning wheel 40 and of the driving wheel 40a is movable into a position of mutual contact (Fig. 8a) or into a position of separation (Fig. 8b). In particular, in the position of mutual contact (Fig. 8a) the hose is in contact with both the further driving wheel 40a and the positioning wheel 40 and is moved by the former, while in the position of separation (Fig. 8b) the further driving wheel 40a and the positioning wheel 40 are mutually spaced apart and allow insertion of the hose 100. Preferably, the passage between the two positions is implemented through an auxiliary motor **40b** that acts on the movement of the positioning wheel 40, the axis of which can be moved along a slot.

The first positioning wheel 40 is capable of varying the direction of the hose 100 taking it from vertical 1c to substantially horizontal, preferably in longitudinal direction 1a.

The positioning device 4 further comprises a second positioning wheel **41,** preferably capable of arranging the hose on the ground or at the depth ditched by the plow-like member 80. The lowest portion, in vertical direction 1c, of the second positioning wheel 41 is preferably arranged vertically, in use, a few centimetres below the lowest portion, in vertical direction 1c, of the first positioning wheel 40.

Moreover, the second positioning wheel 41 preferably has its axis in transverse direction 1b. Moreover, it is placed in longitudinal direction 1a and in the direction of forward movement farther back in respect of the first positioning wheel 40.

The second positioning wheel 41 is preferably labile constrained with the first frame 8 so as to be movable in vertical direction to be able to adjust its height or depth. Therefore, it is connected to the first frame 8 preferably through an articulated parallelogram **42** and a vertical position regulator **43.**

Between the positioning device 4 and the uncoiling device 3 the cutting device 5 is present. It is capable of cutting the hose 100, preferably along the horizontal plane. The cutting device 5 preferably comprises a blade **50** and a motor for moving **51** said blade 50.

Preferably, close to the cutting device 5 a control sensor of the hose is present, capable of indicating any problems during sliding. Preferably, it consists of a sensor of ultrasonic type.

In front of the positioning device 4, in longitudinal direction 1a and the direction of forward movement, the covering device 6 is preferably present, capable of covering the irrigation hose 100 with soil.

It comprises one or two circular shovels **60,** capable of covering the hose 100 with soil. The shovels 60 are constrained to a fourth frame 61, preferably connected to the first frame and movable, preferably also in vertical direction 1c, in respect of said first frame 8.

Covering of the hose can be continuous with a damping device or alternated (simulating a shovelful of soil) at programmable distances, through a motorized device that moves vertically.

Finally, the hose spreading unit 1 comprises electronic control means, connected to the various elements and capable of controlling the motors described, in particular the cutting device 5 and the uncoiling device 3, and the covering device 6, if motorized and present.

Operation of the hose spreading unit 1 described above in structural terms is as follows.

In the preparation step of the hose spreading group 200, it is constrained to the agricultural machine 300 through the fastening means 204, in a manner known per se.

The irrigation hoses 100 coiled in rolls 102, are constrained to the roll holding devices 2, on the uncoiling reels 22 of each hose spreading unit 1.

The irrigation hoses 100 are uncoiled and fed respectively through the double roller 36 and the subsequent conical double rollers 34.

Moreover, the calender 30 is opened, moving the drive roller 31 away from the second roller 32 and the hose is inserted inside the calender 30. The calender 30 is then closed, moving, through electronic control, the drive roller 31 towards the second roller 32 again.

The hose 100 is then fed through the sliding channel 37.

From here, uncoiling of the hose 100 can be automatically controlled by an electronic control and automatically, if the drive roller 31 controls its uncoiling. The hose 100 is thus coiled around a part of the first positioning wheel 40 and above the lower plate 82a and reaches the second positioning wheel 41 which constrains it to the ground until reaching the circular shovels 60 for earthing up.

The hose spreading units 1, and the agricultural machine 300 including them, can then be used.

The agricultural machine 300 is started up, in longitudinal direction 1a and in the direction of forward movement.

The hose spreading units 1 are positioned, through electronic control, and electric or hydraulic motors, in particular first movement means 71, preferably so that the supporting wheel 83 is in contact with the ground, the plow-like member 80 has the lower plate 82a slightly buried in the ground, preferably by a distance of less than 5 cm, and the shovels 60 also have the lower tip slightly buried in the ground.

The positions of the supporting wheel 83, of the shovels 60, and of the second positioning wheel 41 are adjusted, in particular along the vertical axis 1c.

The hose 100 is uncoiled as described and remains aligned in transverse direction 1b at all times, as first the double roller 36, followed by the conical double rollers 34 with increasing conicity, followed by the calender 30 and finally the sliding channel 37 align the hose 100 progressively in transverse direction 1b, without damaging it, despite the fact that the hose 100 is, along the same axis, in variable position on the roll 102.

Subsequently, the agricultural machine 300 moves forward, the calender 30 controls uncoiling of the hose 100 and the latter is positioned on the ground by the second positioning wheel 41 and totally or partly covered by the shovels 60 at regular intervals. It is not necessary to constrain the hose to a pole embedded in the ground, as the hose is constrained by the second positioning wheel 41.

The agricultural machine 300, together with the hose spreading group 200, then positions a plurality of aligned and parallel hoses, at a selected depth in the ground or on the surface.

At the end of the field, when the distance has been covered, the cutting device 5 cuts the hose which is thus completely positioned on the ground. When the machine is raised at the end of the field, the automatic cycle starts, initially uncoiling the amount of hose required on arrival on that side of the field, then cuts and immediately uncoils the amount of hose required at the start of the field before moving forward again.

At this point the automatic step ends and it is possible to move forward again.

The agricultural machine 300 can reactivate the uncoiling device 3 and spread new hoses 100.

The irrigation hoses 100 can then be used to irrigate the fields.

The hose spreading unit 1 according to the invention achieves important advantages.

In fact, it is capable of uncoiling and automatically positioning the irrigation hoses 100 preventing them from breaking, as they are handled with high precision, greatly reducing the use of personnel on the ground.

The invention is susceptible to variants falling within the scope of the inventive concept defined by the claims.

Within this scope, all details can be replaced by equivalent elements and the materials, shapes and dimensions can be any.

## Claims

1. Hose spreading unit (1) for agricultural machine (300) for spreading an irrigation hose (100) on the ground, comprising:
- a roll holding device (2), capable of supporting said irrigation hose (100) coiled into rolls (102),
- a positioning device (4) capable of arranging said irrigation hose (100) uncoiled on the ground, and
**characterized by** the fact of comprising:
- an uncoiling device (3), capable of uncoiling said irrigation hose (100) and canalizing it to said positioning device (4), and comprising:
- a calender (30) comprising at least a driving roller (31) suitable to move said irrigation hose (100);
- a flow channel (37) downstream said calender (30) suitable to canalize said irrigation hose (100) in a precise way, substantially without variations of positions of directions at right angles with the axial direction of said irrigation hose (100).

2. Hose spreading unit (1) according to the preceding claim, wherein said driving roller (31) is arranged on a movable arm (33), which can be moved by a piston (33a) in such a way that said driving roller (31) may be spaced from a second roller (32) of said calender (30) and may open or close said calender (30).

3. Hose spreading unit (1) according to any of the preceding claims, wherein said uncoiling device (3) comprises a plurality of double conical rollers (34) upstream said calender (30), with a central minimum diameter, said double conical rollers (34) having an increasing conicity from upstream to downstream.

4. Hose spreading unit (1) according to any of the preceding claims, wherein said uncoiling device (3) comprises a double roller (36) upstream said double conical rollers (34).

5. Hose spreading unit (1) according to any of the preceding claims, wherein said positioning device (4) comprises first positioning wheel (40) arranged in proximity but without contact with the ground, and having a transversal axis (1b), and wherein said hose spreading unit (1) comprises a first frame (8) defining a closed portion (82) provided with a lower plate (82a) under said positioning wheel (40).

6. Hose spreading unit (1) according to any of the preceding claims, wherein said first positioning wheel (40) is arranged under said uncoiling device (3) in such a way that said irrigation hose (100) moves down vertically from said flow channel (37) to said positioning wheel (40).

7. Hose spreading unit (1) according to any of the preceding claims, wherein said positioning device (4) comprises a second positioning wheel (41), preferably capable to place said irrigation hose (100) on the ground.

8. Hose spreading unit (1) according to any of the preceding claims, wherein said roll holding device (2) is arranged vertically above said calender (30).

9. Hose spreading group (200) comprising a plurality of hose spreading units (1) according to any of the preceding claims.

10. Agricultural machine (300) comprising a hose spreading group (200) according to the preceding claim 9.
